# EUROPÄISCHE PATENTANMELDUNG

(11) **EP 3 564 599 A1**
(43) Veröffentlichungstag der Anmeldung: **06.11.2019**
(21) Anmeldenummer: 19172208.1
(22) Anmeldetag: 02.05.2019
(51) Int. Cl.: F24S 20/67, F24S 25/13, F24S 25/65, F24S 25/70, F24S 30/425, F24S 40/44, H02S 20/24, F24S 20/62, E04D 13/15

(54) **MODUL ZUR GEWINNUNG VON SOLARENERGIE AN GEBÄUDEKANTEN**

(30) Priorität: 04.05.2018 DE 102018110711; 29.06.2018 DE 102018115800
(71) Anmelder: Anerdgy AG, 8005 Zürich (CH)
(72) Erfinder: Köhler, Sven, 8134 Adliswil (CH)
(74) Vertreter: Müller Hoffmann & Partner

(57) **Zusammenfassung**

Beschrieben wird ein Modul (10) zur Gewinnung von Solarenergie mit
einer Grundträgereinrichtung (12);
einem ersten Solarwandlerträger (30) und einem zweiten Solarwandlerträger (32) mit einem jeweiligen oberen Randabschnitt (36, 40) und einem jeweiligen unteren Randabschnitt (34, 38), wobei der erste und der zweite Solarwandlerträger (30, 32) an ihrem unteren Randabschnitt (34, 38) mit der Grundträgereinrichtung (12) verbunden sind und an ihren oberen Randabschnitten (36, 40) gelenkig miteinander verbunden sind, wobei die Solarwandlerträger (30, 32) geneigt zueinander angeordnet sind;
wenigstens einem ersten Solarwandler (42a, 42b), der an dem ersten Solarwandlerträger (30) befestigt ist, und wenigstens einem zweiten Solarwandler (44a, 44b), der an dem zweiten Solarwandlerträger (32) befestigt ist;
wobei die Grundträgereinrichtung (12) dazu eingerichtet ist, entlang einer Gebäudekante (20) von einer Gebäudefassade (60) zu einem Gebäudedach (16), insbesondere Gebäudeflachdach, befestigt zu werden, wobei der erste Solarwandler (42a, 42b) näher an der Gebäudekante (20) angeordnet ist als der zweite Solarwandler (44a, 44b).

## Beschreibung

Die vorliegende Erfindung betrifft ein Modul zur Gewinnung von Solarenergie, ein System aus mehreren solchen Modulen sowie ein Gebäude, das mit einem solchen Modul oder einem solchen System ausgestattet ist.

Der Gewinnung von Solarenergie als Alternative zur Energie aus fossilen Brennstoffen kommt eine immer größere Bedeutung zu. Bekanntermaßen kann Solarenergie mittels Solarwandler gewonnen werden. Dabei können Solarwandler als photovoltaische oder thermische Wandler ausgeführt sein. Gemeinhin spricht man bei Solarwandlern auch von Solarmodulen, wenn es sich um photovoltaische Wandler handelt, und von Solarkollektoren, wenn es sich um thermische Wandler handelt.

Gerade in städtischen Siedlungsräumen besteht ein hoher Bedarf, Dachflächen ausnützen zu können, um regenerativ Energie gewinnen zu können. Häufig sind allerdings zentrale Bereiche von Dachflächen, insbesondere von Flachdächern ungünstig, weil sich dort bereits Apparaturen für die Klimatisierung von Gebäuden, Betriebsräume für Aufzüge, Abluftleitungen, Dachterrassen, Dachbegrünungen oder dergleichen befinden. Weitgehend ungenutzt sind üblicherweise die Übergangsbereiche zwischen einem Gebäudedach, insbesondere einem Flachdach, und einer Gebäudefassade. An solchen Übergangsbereichen sind bei üblichen Flachdachgebäuden normalerweise die Gebäudefassade nach oben hin verlängernde Mauerabschnitte vorgesehen, wobei eine Mauerkrone eines solchen Mauerabschnitts üblicherweise höher liegt als eine Außenfläche des Flachdachs.

Die der Erfindung zur Grunde liegende Aufgabe wird darin gesehen, ein Modul für die Gewinnung von Solarenergie bereitzustellen, das im Übergangsbereich zwischen Dach und Fassade eines Gebäudes angeordnet werden kann.

Diese Aufgabe wird gelöst durch die Gegenstände der unabhängigen Patentansprüche. Mögliche Ausgestaltungen sind in den abhängigen Patentansprüchen enthalten.

Vorgeschlagen wird also ein Modul zur Gewinnung von Solarenergie mit einer Grundträgereinrichtung; einem ersten Solarwandlerträger und einem zweiten Solarwandlerträger mit einem jeweiligen oberen Randabschnitt und einem jeweiligen unteren Randabschnitt, wobei der erste und der zweite Solarwandlerträger an ihrem unteren Randabschnitt mit der Grundträgereinrichtung verbunden sind und an ihren oberen Randabschnitten gelenkig miteinander verbunden sind, wobei die Solarwandlerträger geneigt zueinander angeordnet sind; wenigstens einem ersten Solarwandler, der an dem ersten Solarwandlerträger befestigt ist, und wenigstens einem zweiten Solarwandler, der an dem zweiten Solarwandlerträger befestigt ist; wobei die Grundträgereinrichtung dazu eingerichtet ist, entlang einer Gebäudekante von einer Gebäudefassade zu einem Gebäudedach, insbesondere Gebäudeflachdach, befestigt zu werden, wobei der erste Solarwandler näher an der Gebäudekante angeordnet ist als der zweite Solarwandler.

Ein derart ausgebildetes Modul weist eine somit einen ersten Solarwandler auf, der eine Art geneigte Verlängerung oder geneigten Abschluss der Gebäudefassade bilden kann. Anders ausgedrückt kann auch davon gesprochen werden, dass der erste Solarwandler von einem Innenbereich des Gebäudedachs abgewandt ist. Der zu dem ersten Solarwandler geneigt angeordnete zweite Solarwandler ist dem Innenbereich des Gebäudedachs zugewandt. Entsprechend lassen sich erste und zweite Solarwandler in der Art eines auf dem Kopf stehenden "V" entlang einer Gebäudekante anordnen.

Oberhalb des ersten Solarwandlers kann an dem oberen Randabschnitt des Solarwandlerträgers ein Abdeckelement angeordnet sein, das entlang einer oberen Kante des ersten Solarwandlers verläuft. Dabei kann zwischen dem Abdeckelement und dem ersten Solarwandlerträger ein Hohlraum gebildet sein. Ein solches Abdeckelement kann beispielsweise dazu dienen, Installationsleitungen, wie beispielsweise elektrische Kabel oder dergleichen, für die Solarwandler zu schützen, die insbesondere in dem Hohlraum zwischen Solarwandlerträger und Abdeckelement aufgenommen sind.

Das Abdeckelement kann wenigstens einen gebogenen Abdeckabschnitt aufweisen, wobei der Abdeckabschnitt konvex oder konkav gebogen ist bezogen eine Außenseite des Abdeckelements. Durch eine passende Ausgestaltung des Abdeckelements kann die Größe des zur Verfügung stehenden Hohlraums beeinflusst werden. Ferner kann durch die Form des Abdeckelements die entlang des ersten Solarwandlers zu dem oberen Randabschnitt des Solarwandlerträgers strömende Luft in geeigneter Weise beeinflusst werden.

An dem ersten Solarwandlerträger kann an dem unteren Randabschnitt ein Rinnenelement angeordnet sein, das entlang einer unteren Kante des ersten Solarwandlers verläuft. Dabei kann zwischen dem Rinnenelement und der unteren Kante des ersten Solarwandlers ein Traufelement angeordnet sein, das mit dem ersten Solarwandlerträger verbunden ist. Durch das Rinnenelement kann verhindert werden, dass Niederschlag, der sich auf den flächigen Solarwandlern sammelt, über die Gebäudekante an der Gebäudefassade nach unten geleitet wird. Hierdurch können unerwünschte Schäden an der Gebäudefassade verhindert werden.

Das Rinnenelement kann wenigstens eine Abflussöffnung aufweisen, die in einer Stirnwand des Rinnenelements angeordnet ist. Dabei kann die Abflussöffnung mit einer Abflussleitung verbunden sein, die ausgehend von dem Rinnenelement in Richtung des zweiten Solarwandlerträgers geführt ist. Entsprechend kann durch das Rinnenelement gesammelter Niederschlag in Richtung eines Innenbereichs eines Gebäudedachs geleitet werden, insbesondere in die Nähe von Dachbereichen, in denen sich entsprechende Abflüsse für Niederschlag befinden.

Die Rinnenelemente benachbarter Module können voneinander getrennt sein. Das heißt, dass Niederschläge, die von den Solarwandlern des einen Moduls gesammelt werden, nicht an eine benachbarte Rinne weitergeleitet werden, sondern direkt aus der jeweiligen Rinne eines Moduls zum Innenbereich des Dachs abgeleitet werden. Dies hat auch den Effekt, dass pro Modul ein geeignet geneigtes Rinnenelement angeordnet werden kann, ohne dass dabei eine Gesamtneigung verbundener Rinnenelemente über eine größere Länge berücksichtigt werden muss.

Der zweite Solarwandler kann relativ zum zweiten Solarwandlerträger verschwenkbar sein, derart dass durch das Verschwenken des zweiten Solarwandlers eine im zweiten Solarwandlerträger vorhandene Öffnung zugänglich ist. Dabei kann ein schwenkbarer zweiter Solarwandler in einem Schwenkrahmen aufgenommen sein, der mit dem zweiten Solarwandlerträger verbunden ist. Der Schwenkbare zweite Solarwandler ermöglicht den Zugang zu dem Modul von dem Innenbereich des Gebäudedachs, so dass unterhalb der Solwarwandler angeordnete Installationen zugänglich sind, beispielsweise für Wartungs- und Reparaturarbeiten. Sind mehrere Module benachbart zueinander angeordnet, kann beispielsweise jedes n-te Modul, etwa jedes dritte oder fünfte Modul, einen schwenkbaren zweiten Solarwandler aufweisen, der den Zugang zu allen benachbarten Modulen ermöglicht.

Alternativ oder ergänzend können einzelne oder alle Solarwandlerträger, insbesondere erste Solwarwandlerträger oder/und zweite Solarwandlerträger, relativ verschwenkbar zu der Grundträgereinrichtung ausgeführt sein. Dabei können die Solarwandlerträger beispielsweise in einem oberen Randbereich eine mit dem Grundträgereinrichtung verbundene Schwenkachse aufweisen, so dass die Solarwandlerträger um diese Schwenkachse nach oben oder unten geschwenkt werden können. Hierdurch ist es möglich, dass die ersten oder/und zweiten Solarwandler samt ihren Solarwandlerträgern klappenartig bewegt werden können, so dass sie im Wartungsfall nach oben bewegt werden können, um den Zugang unter die Solarwandler freizugeben.

Die schwenkbare Anbringung der Solarwandlerträger kann insbesondere an einem dem Modul zugeordneten Querträger erfolgen, der auf Stützen der Grundträgereinrichtung gelagert ist. Dabei können die Stützen bezogen auf einen montierten Zustand des Moduls auf einem Dach im Wesentlichen vertikal verlaufen.

Damit der bzw. ein Solarwandlerträger in einem nach oben geschwenkten Zustand gehalten werden kann (Wartungsstellung), um den Zugang unter das betreffende Modul zu ermöglichen, können Stützelemente vorgesehen sein, die den Solarwandlerträger im geöffneten Zustand an der Grundträgereinrichtung abstützen. Die Stützelemente sind insbesondere längenverstellbar ausgebildet. Als Stützelemente können beispielsweise einfache, insbesondere in unterschiedlichen Stellungen feststellbare, Teleskopstangen eingesetzt werden. Denkbar sind als Stützelemente auch hydraulische Federelemente, die das nach oben Bewegen eines Solarwandlers vereinfachen. Weiter ist es auch denkbar, dass ein Stützelement so ausgebildet ist, dass mittels einer Drehbewegung um die Längsachse des Stützelements eine translatorische Verlängerung bzw. Verkürzung des Stützelements erreicht wird. Dabei kann daran gedacht werden, dass die Drehbewegung motorisch erzeugt wird, etwa durch einen Elektromotor mit einer Art Spindelantrieb.

Die Solarwandlerträger können in ihrem unteren Randbereich Rastabschnitte bzw. Verriegelungsabschnitte aufweisen, die mit entsprechenden Rastgegenstücken bzw. Verriegelungsgegenstücken, die an der Grundträgereinrichtung gelagert sind, in Eingriff bringbar sind. Hierdurch können die Solarwandlerträger in der nach unten geklappten Stellung, die auch als Normalstellung bezeichnet werden kann, an der Grundträgereinrichtung gesichert werden.

Auf dem ersten Solarwandlerträger können mehrere, insbesondere zwei erste Solarwandler nebeneinander angeordnet sein, wobei zwischen zwei benachbarten Solarwandlern ein Wandlerabstand ausgebildet ist. Dabei kann zwischen zwei benachbarten Solarwandlern ein Füllelement angeordnet sein. Ein solches Füllelement kann eine zur Fassadenseite des Gebäudes hin sichtbare Oberfläche aufweisen, die eine gewünschte Oberflächenstruktur oder/und Farbe aufweist. Beispielsweise kann das Füllelement ein Farbe aufweisen, die etwa der Farbe der Gebäudefassade entspricht. Das Füllelement kann auch in einer Kontrastfarbe zu den in der Regel dunklen Solarwandlern aufweisen, derart, dass das Füllelement als eine Art Strukturelement in der Fläche der Solarwandler wahrgenommen wird.

Auf dem zweiten Solarwandlerträger können mehrere, insbesondere zwei zweite Solarwandler nebeneinander angeordnet sein. Die zweiten Solarwandler können dabei insbesondere direkt nebeneinander angeordnet sein.

Die Grundträgereinrichtung kann derart ausgeführt sein, dass der untere Randabschnitt des ersten Solarwandlerträgers drehbar an der Grundträgereinrichtung abgestützt ist. Ferner kann die Grundträgereinrichtung derart ausgeführt sein, dass der untere Randabschnitt des ersten Solarwandlerträgers bezogen auf einen Untergrund, auf dem die Grundträgereinrichtung aufliegt, einen größeren Abstand zum Untergrund aufweist als der untere Randabschnitt des zweiten Solarwandlerträgers. Durch die drehbare Lagerung des ersten Solarwandlerträgers an der Grundträgereinrichtung und die gelenkige Abstützung des ersten und des zweiten Solarwandlerträgers an ihrem jeweiligen oberen Randabschnitt, kann die Neigung der beiden Solwarwandlerträger zueinander passend an die Gegebenheiten bei einem Gebäude eingestellt werden.

Der erste Solarwandlerträger kann eine zwischen dem unteren Randabschnitt und dem oberen Randabschnitt gemessene Länge aufweisen, die größer ist als die Länge des zweiten Solarwandlerträgers. Hierdurch kann sichergestellt werden, dass für zusätzliche Bauteile, die fassadenseitig an dem Modul angeordnet werden müssen, entsprechender Bauraum vorhanden ist. Es wird dabei insbesondere an den Bauraum für das bereits erwähnte Abdeckelement und/oder das Rinnenelemente bzw. das Traufelement gedacht.

Der erste Solarwandlerträger und der zweite Solarwandlerträger können einen Winkel von etwa 40° bis 140°, vorzugsweise etwa 60° bis 120°, einschließen. Dabei können je nach Aufstellort und Ausgestaltung der Grundträgereinrichtung, der erste Solarwandler und der zweite Solarwandler unterschiedliche Neigung aufweisen bezogen auf eine Horizontale, die etwa durch den Untergrund des Gebäudedachs gebildet werden kann.

Die Erfindung betrifft auch ein System zur Gewinnung von Solarenergie mit mehreren, oben beschriebenen Modulen, wobei die Module benachbart zueinander entlang einer Gebäudekante angeordnet sind.

Ein solches System kann wenigstens ein Eckverbindungselement umfassen, das dazu eingerichtet ist, zwei über eine Gebäudeecke benachbarte Module miteinander zu verbinden. Da benachbart zueinander angeordnete Module aus einer bestimmten Distanz als durchgehende Fläche wahrgenommen werden, kann durch ein Eckverbindungselement der Eindruck einer durchgehenden Fläche auch über Eck sichergestellt werden.

Schließlich betrifft die Erfindung auch ein Gebäude mit einer im Übergangsbereich zwischen einer Gebäudefassade und einem Gebäudedach befindlichen Gebäudekante, an der wenigstens ein oben beschriebenes Modul oder ein oben beschriebenes System mit mehreren benachbarten Modulen angebracht ist.

Die Erfindung wird nachfolgend unter Bezugnahme auf die anliegenden Figuren genauer beschrieben.
Fig. 1 zeigt in den Teilfiguren A) und B) vereinfacht und schematisch ein Modul zur Gewinnung von Solarenergie in zwei unterschiedlichen perspektivischen Darstellungen.
Fig. 2 zeigt in den Teilfiguren A) und B) vereinfacht und schematisch das Modul der Fig. 1 in einer Seitenansicht und einer Frontansicht.
Fig. 3 zeigt in den Teilfiguren A) und B) vereinfacht und schematisch ein weiteres Modul zur Gewinnung von Solarenergie in zwei unterschiedlichen perspektivischen Darstellungen.
Fig. 4 zeigt in den Teilfiguren A) und B) vereinfacht und schematisch das Modul der Fig. 3 in einer Seitenansicht und einer Frontansicht.
Fig. 5 zeigt vereinfacht und schematische eine Teilansicht einer Gebäudefassade mit einem System aus Modulen der Fig. 1 und 2.
Fig. 6 zeigt vereinfacht und schematische eine Teilansicht einer Gebäudefassade mit einem System aus Modulen der Fig. 3 und 4.
Fig. 7 zeigt vereinfacht und schematisch in einer Seitenansicht ein Modul der Fig. 4 und 5 ohne Grundträgereinrichtung und mit unterschiedlichen Ausgestaltungen eines Abdeckelements und eines Rinnenelements.
Fig. 8 zeigt in den Teilfiguren A) und B) vereinfacht und schematisch in zwei perspektivischen Darstellungen ein Eckverbindungselement für ein System aus Modulen, die über Eck angeordnet sind.
Fig. 9 zeigt vereinfacht und schematisch eine Draufsicht auf ein Gebäude mit einem System mit mehreren Modulen zur Gewinnung von Solarenergie;
Fig. 10 zeigt vereinfacht und schematisch ein Modul, bei dem beide Solarwandlerträger schwenkbar sind;
Fig. 11 zeigt vereinfacht und schematisch das Modul der Fig. 10 angeordnet im Bereich einer Dachkante;
Fig. 12 zeigt vereinfacht und schematisch in den Teilfiguren A) und B) Vergrößerungen entsprechend den eingekreisten Bereichen A und B der Figur 10;
Fig. 13 zeigt vereinfacht und schematisch einen vergrößerten oberen Bereich des Moduls der Figuren 10 und 11;
Fig. 14 zeigt vereinfacht und schematisch in den drei Teilfiguren A) bis C) das Einhängen und Verriegeln eines Solarwandlerträgers in einem unteren Bereich.

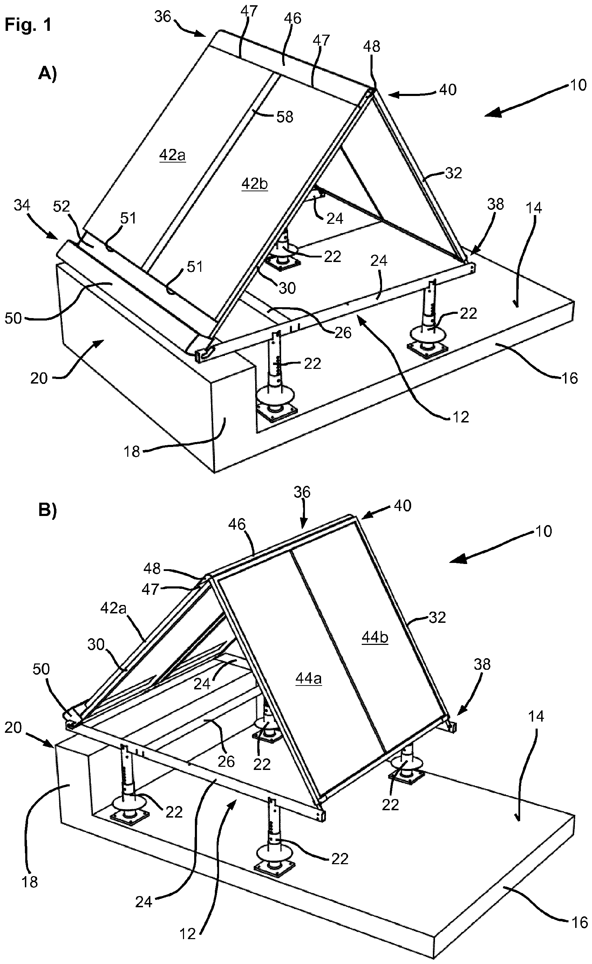

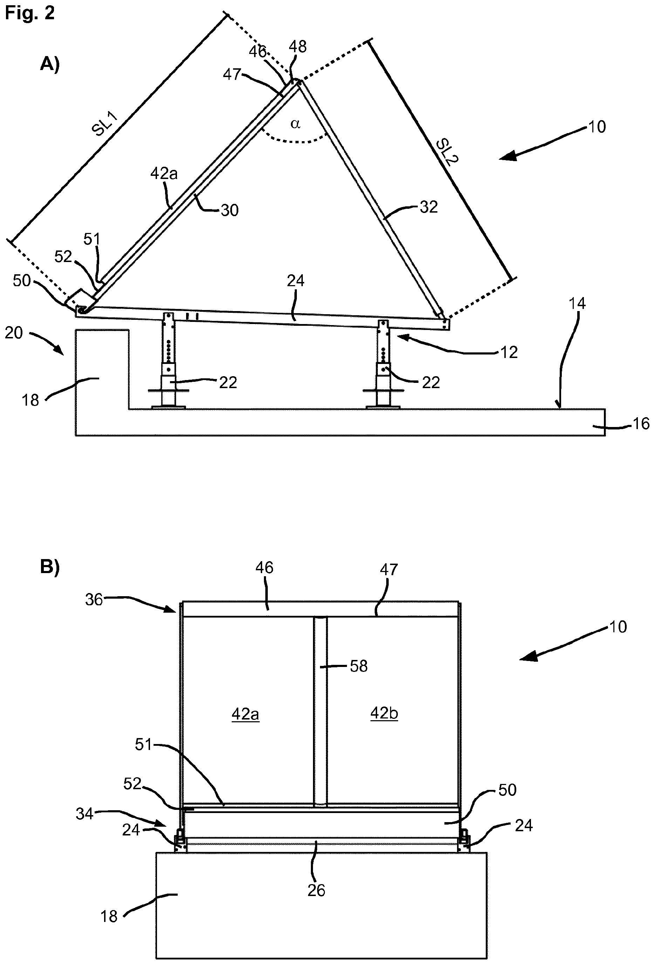

In den Figuren 1 und 2 ist schematisch und vereinfacht ein Modul 10 zur Gewinnung von Solarenergie in zwei verschiedenen perspektivischen Darstellung von schräg vorne (Fig. 1A) und von schräg hinten (Fig. 1B) gezeigt. Das Modul 10 umfasst einen Grundträger 12 (Grundträgereinrichtung). Der Grundträger 12 ist auf einem Untergrund 14, hier einen Flachdach 16 eines ansonsten nicht dargestellten Gebäudes abgestützt. Das Flachdach 16 weist eine Abschlussmauer 18 auf. Es ist leicht vorstellbar, dass sich an die Abschlussmauer 18 nach unten hin eine Gebäudefassade anschließen kann. Der Bereich des Gebäudes, bei dem das Flachdach in die Fassade übergeht bzw. der Bereich mit der Abschlussmauer 18 kann auch allgemein als Gebäudekante 20 bezeichnet werden. Das Modul 10 ist also dazu eingerichtet, dass es entlang einer Gebäudekante 20 auf einem Gebäudedach, insbesondere Flachdach 16 angeordnet werden kann.

Im vorliegenden Beispiel ist der Grundträger mittels mehrerer Stützelemente 22 auf dem Untergrund 14 abgestützt. Die Stützelemente 22 sind höhenverstellbar ausgeführt. Der Grundträger wird im Wesentlichen gebildet durch zwei Längsträger 24 und wenigstens einen Querträger 26, der sich zwischen den beiden Längsträgern 24 erstreckt und diese miteinander verbindet. Selbstverständlich sind auch andere Konstruktionen des Grundträgers 12 denkbar, etwa mit diagonal verlaufenden, fachwerkartigen Querträgern oder/und mehr als zwei Längsträgern oder/und mehr als einem Querträger.

Das Modul 10 umfasst einen ersten Solarwandlerträger 30 und einen zweiten Solarwandlerträger 32. Der erste Solarwandlerträger 30 weist einen unteren Randabschnitt 34 und einen oberen Randabschnitt 36 auf. Der zweite Solarwandlerträger 32 umfasst einen unteren Randabschnitt 38 und einen oberen Randabschnitt 40. Der erste Solwarwandlerträger 30 ist im Bereich seines unteren Randabschnitts 34 mit dem Grundträger 12 verbunden. Dabei kann der erste Solarwandlerträger 30 gelenkig mit den beiden Längsträgern 24 verbunden sein. Im Bereich ihrer jeweiligen oberen Randabschnitte 36, 40 sind der erste und der zweite Solarwandlerträger 30, 32 gelenkig miteinander verbunden. Die beiden Solarwandlerträger 30, 32 sind geneigt zueinander angeordnet. Hierbei wird zwischen ihnen ein Winkel α (Fig. 2A) gebildet, der im Beispiel der Figuren 1 und 2 etwa 75° beträgt.

Das Modul 10 umfasst weiter mehrere erste Solarwandler 42a, 42b die an dem ersten Solarwandlerträger 30 befestigt sind. An dem zweiten Solarwandlerträger 32 sind mehrere zweite Solarwandler 44a 44b befestigt. Auch wenn hier an jedem Solawandlerträger 30, 32 jeweils zwei Solwarwandler 42a, 42b bzw. 44a, 44b dargestellt sind, stellt dies keine zwingende Einschränkung dar. Vielmehr können an den Solarwandlerträgern 30, 32 auch mehr oder weniger Solarwandler angebracht sein. Entsprechend kann auch das Modul 10 mehr oder weniger als die in Figur 1 dargestellten jeweils zwei Solarwandler 42a, 42b bzw. 44a, 44b aufwiesen. Im vorliegenden Beispiel wird davon ausgegangen, dass als Solarwandler 42a, 42b bzw. 44a, 44b Solarmodule zur photovoltaischen Nutzung von Solarenergie eingesetzt werden. Alternativ können auch Solarkollektoren eingesetzt werden, welche die Solarenrgeie thermisch nutzen. Selbstverständlich ist es auch denkbar, beliebige Kombinationen aus photovoltaischen Solarmodulen und thermischen Solarkollektoren an einem Modul 10 anzubringen, beispielsweise könnten die ersten Solarwandler 42a, 42b als Solarmodule (photovoltaisch) und die zweiten Solarwandler 44a, 44b als Solarkollektoren (thermisch) ausgebildet sein.

An dem ersten Solarwandlerträger 30 ist im Bereich des oberen Randabschnitts 36 ein Abedeckelement 46 angeordnet. Das Abdeckelement 46 verläuft entlang einer oberen Kante 47 der beiden ersten Solarwandler 42a, 42b (Fig. 2A). Zwischen dem Abdeckelement 46 und dem Solarwandlerträger 30, insbesondere dessen oberen Randabschnitt 36 ist ein Hohlraum 48 gebildet. In diesem Hohlraum 48 können beispielsweise zur Installation und zum Betrieb der Solarwandler 42a, 42b, 44a, 44b erforderliche Leitungen geschützt untergebracht sein.

Im Bereich seines unteren Randabschnitts 34 weist der erste Solarwandlerträger 30 ein Rinnenelement 50 auf. Das Rinnenelement 50 erstreckt sich entlang einer jeweiligen unteren Kante 51 der Solarwandler 42a, 42b. In Richtung der Solarwandler 42a, 42b schließt sich an das Rinnenelement 50 ein Traufelement (Traufblech) 52 an. Das Traufelement ist unterhalb der Solarwandler 42a, 42b angeordnet, liegt auf dem Solarwandlerträger 30 auf und ist überlappend in des Innere des Rinnenelements 50 aufgenommen. Hierdurch kann gewährleistet werden, dass Niederschlage, der sich auf den Solarwandlern 42a, 42b sammelt, mittels des Rinnenelements 50 abgeleitet werden kann. Das Rinnenelement 50 ist fest mit dem ersten Solarwandlerträger 30 verbunden und kann mit diesem relativ zum Grundträger 12 bzw. dem Untergrund 14 geschwenkt werden. Das heißt, dass das Rinnenelement unabhängig von der späteren Einbaulage des ersten Solarwandlerträgers 30 immer gleich zu diesem ausgerichtet ist. Das Rinnenelement 50 verhindert insbesondere auch, dass von den Solarwandlern 42a, 42b gesammelter Niederschlag entlang der Abschlussmauer 18 zur Fassade hin strömt.

Die Solarwandlerträger 30, 32 sind rahmenartige Bauteile. Beispielsweise ist der erste Solarwandlerträger eine Art Rahmen, auf dem die ersten Solarwandler 42a, 42b befestigt sind, Dabei decken die ersten Solarwandler 42a, 42b den ersten Solarwandlerträger 30 ab. Der zweite Solarwandlerträger 32 ist beispielhaft als Rahmen dargestellt, in dem die beiden zweiten Solarwandler 44a, 44b aufgenommen sind. Dabei ist der zweite Solarwandlerträger 32 sichtbar und fasst die Solarwandler 44a, 44b ein. Die Ausgestaltung der Solarwandlerträger 30, 32 kann jede geeignete rahmenartige Konstruktion aufweisen, die zur stabilen Befestigung und Abstützung der Solarwandler 42a, 42b, 44a, 44b dient.

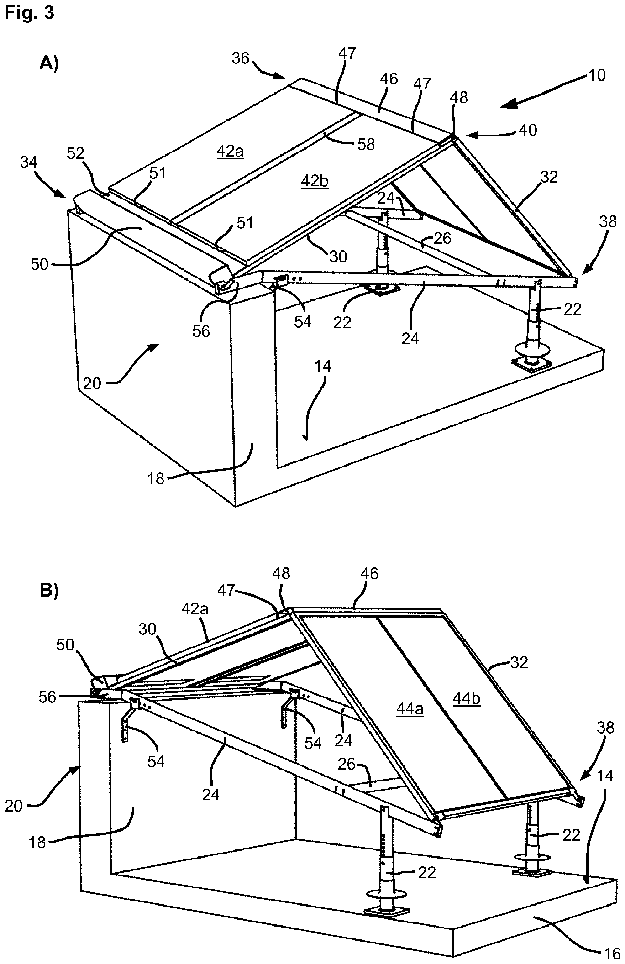

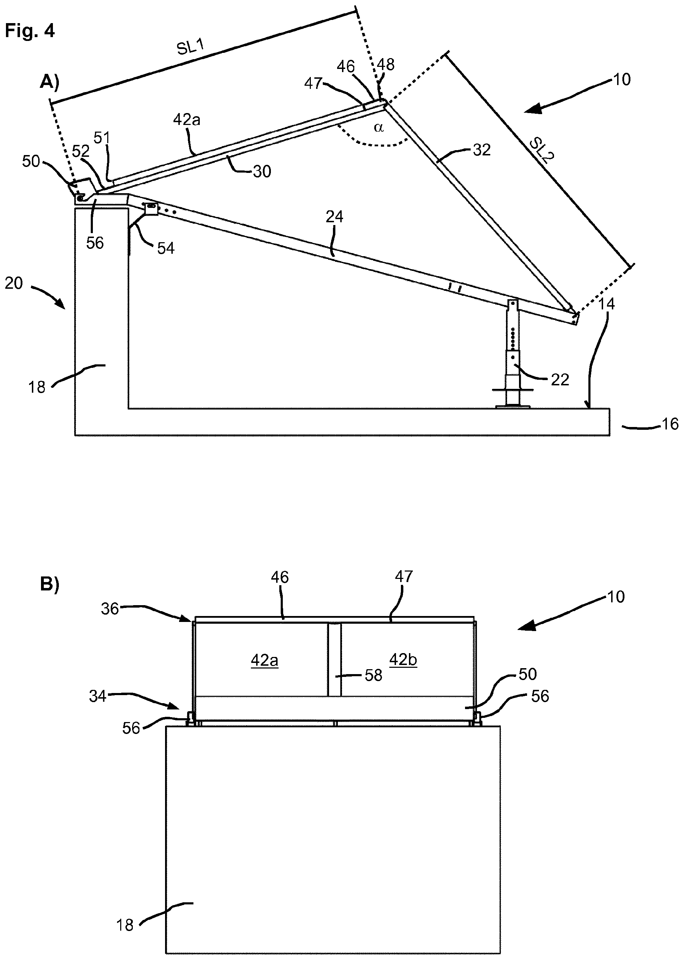

In den Figuren 3 und 4 ist ein leicht modifiziertes Modul 10 gezeigt, das aber in Bezug auf die Solarwandlerträger 30, 32, die Solarwandler 42a, 42b, 44a, 44b, das Abdeckelement 46 und das Rinnenelement 50 im Wesentlichen gleich aufgebaut ist. Insoweit gilt das oben zu den Figuren 1 und 2 Gesagte genauso für die Figuren 3 und 4. Entsprechend sind in den Figuren 3 und 4 auch die gleichen Bezugszeichen gezeigt, ohne dass diese nochmals erklärt werden.

Das Modul 10 der Figuren 3 und 4 weist einen modifizierten Grundträger 12. Dieser ist mit seinen Längsträgern 24 mittels Halterungen 54 mit der Abschlussmauer 18 verbunden. Die Halterungen 54 bilden insoweit eine andere Art von Stützelementen, die nicht auf dem Untergrund 14, also dem Flachdach 16 abgestützt sind, sondern an der Abschlussmauer 18 befestigt sind. Die Längsträger 24 weisen jeweilige Kopplungsabschnitte 56 auf, an denen der erste Solarwandlerträger 30 gelenkig abgestützt ist. Die Kopplungsabschnitte 56 sind geneigt bzw. gekröpft zum jeweiligen Längsträger 24 ausgebildet.

Verglichen mit dem Beispiel der Figuren 1 und 2 ist die Abschlussmauer 18 des Beispiels der Figuren 3 und 4 deutlich höher. Durch die Anpassung des Grundträgers 12 kann diesem Umstand Rechnung getragen werden, ohne dass der Grundträger sehr hohe bzw. lange Stützelemente 22 benötigt. Hierdurch wird die Stabilität des Grundträgers 12 und seiner Abstützung am Gebäudedach 16 verbessert.

Wie sich unschwer erkennen lässt, sind die beiden Solarwandlerträger 30, 32 der Figuren 3 und 4 unter einem anderen Winkel α geneigt zueinander am Grundträger 12 abgestützt. In diesem Beispiel beträgt der Winkel etwa 115°. Es ergibt sich aus der Zusammenschau der Figuren 1 bis 4, dass der zwischen den Solarwandlerträgern 30, 32 gebildete Winkel α einen großen Bereich einnehmen kann, insbesondere kann er von etwa 40° bis 140°, vorzugsweise von etwa 60° bis 120° betragen. Ferner wird aus der Zusammenschau der Figuren 1 bis 4 ersichtlich, dass die im Wesentlichen gleichartig bzw. identisch ausgebildeten Solarwandlerträger 30, 32 mit unterschiedlichen Grundträgern 12 kombinierbar sind, so dass das Modul 10 an jeweilige Begebenheiten im Bereich eine Gebäudekante 20, also dem Übergang von Flachdach 16 zu einer Fassade, insbesondere unter Einbezug einer Abschlussmauer 18, angepasst werden kann. Das Modul 10 ist somit sehr flexibel und vielseitig einsetzbar.

Aus der jeweiligen Frontansicht der Figuren 2B und 4B bzw. der perspektivischen Ansichten der Figuren 1A und 3A ist ersichtlich, dass zwischen dem ersten Solarwandler 42a und dem zweiten Solarwandler 42b ein Füllelement 58 vorgesehen ist. Das Füllelement 58 erstreckt sich von dem Abdeckelement 46 bis zur unteren Kante 51 der Solarwandler 42a, 42b. Das Füllelement 58 dient insbesondere dazu einen zwischen den beiden Solarwandlern 42a, 42b vorhandener Zwischenraum abzudichten. Ferner dient das Füllelement 58 auch der gegenseitigen Stabilisierung der beiden Solarwandler 42a, 42b. Das Füllelement 58 kann beispielsweise aus einem elastischen Kunststoff hergestellt sein. Ferner kann das Füllelement 58 ein zur Außenseite hin konkave Krümmung aufweisen, so dass es eine Arte Zentralrinne zwischen den beiden Solarwandlern 42a, 42b bildet. Das Füllelement 58 kann auch zu gestalterischen Zwecken genutzt werden, beispielsweise um den Eindruck einer durchgehenden Fläche zu verstärken oder um den Eindruck einer Strukturierung farblich hervorzuheben. Denkbar ist beispielsweise, dass das Füllelement 58 eine zu photovoltaischen Solarmodulen ähnliche, dunkle Farbgebung aufweist, so dass nebeneinander angeordnete Solarmodule in einer gewissen Entfernung als durchgehende Fläche wahrgenommen werden. Andererseits kann das Füllelement 58 eine zu photovoltaischen Solarmodulen unähnliche, hellere Farbgebung aufweist, so dass nebeneinander angeordnete Solarmodule klar voneinander getrennt wahrgenommen werden. Denkbar ist beispielsweise eine Farbgebung, die Farbtöne der Gebäudefassade aufnimmt.

Der Grundträger 12 ist im Übrigen derart ausgeführt ist, dass der untere Randabschnitt 34 des ersten Solarwandlerträgers 30 bezogen auf einen Untergrund 14, auf dem der Grundträger 12 aufliegt, einen größeren Abstand zum Untergrund 14 aufweist als der untere Randabschnitt 38 des zweiten Solarwandlerträgers 32. Dies wird insbesondere durch die relativ zum Untergrund 14 bzw. dem Flachdach 16 geneigt verlaufenden Längsträger 24 illustriert (beispielsweise in Fig. 2A und 4A).

Der erste Solarwandlerträger 30 weist eine größere Länge SL1 auf als der zweite Solarwandlerträger 32 mit seiner Länge SL2. Dies ist illustrativ in den Figuren 2A und 4A gezeigt. Die größere Länge SL1 des ersten Solarwandlerträgers 30 ermöglicht somit das Anbringen des Abdeckelements 46, des Solarwandlers 42a, 42b, des Traufelements 52 und des Rinnenelements 50. Entsprechend kann das Modul 10 fassadenseitig optimal gestaltet werden, um es im Bereich einer Gebäudekante 20 anbringen zu können. Die Längen SL1, SL2 werden insbesondere zwischen den jeweiligen Anlenkpunkten des betreffenden Solarwandlerträgers 30, 32 an dem Grundträger 12 und der gelenkigen Verbindungen der beiden Solarwandlerträger 30, 32 im oberen Randbereich 36 bzw. 40 gemessen.

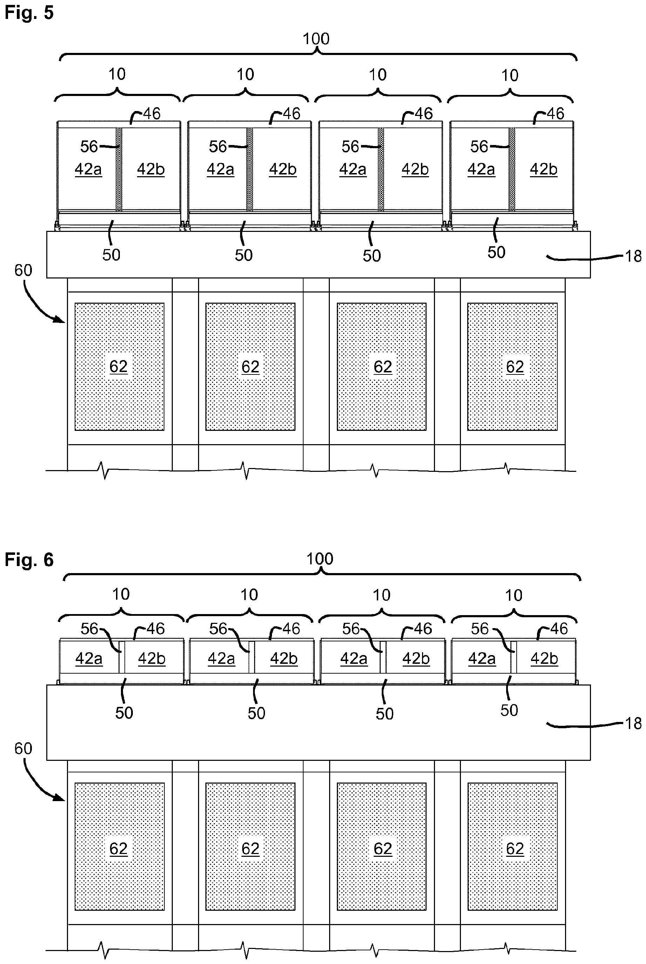

Die Figuren 5 und 6 zeigen schematisch und vereinfacht einen Teil einer Gebäudefassade 60. Dabei sind einige Strukturlinien der Fassade 60 angedeutet, ebenso Fenster 62. Oberhalb der Fassade ist die jeweilige Abschlussmauer 18 ersichtlich. Auf dem jeweiligen Flachdach 16 sind mehrere Module 10 nebeneinander angeordnet. Entsprechend zeigt die Figur 5 ein System 100 mit mehreren Modulen 10 entsprechend der Figuren 1 und 2 und die Figur 6 zeigt ein System 100 mit mehreren Modulen 10 entsprechend den Figuren 3 und 4. Im Beispiel der Figur 5 sind die Füllelemente 58 rein beispielhaft in einer Kontrastfarbe zu den weis dargestellten Solarwandlern 42a, 42b dargestellt. In Figur 6 sind die Füllelemente 58 rein beispielhaft in der gleichen Farbe belassen wie die Solarwandler 42a, 42b.

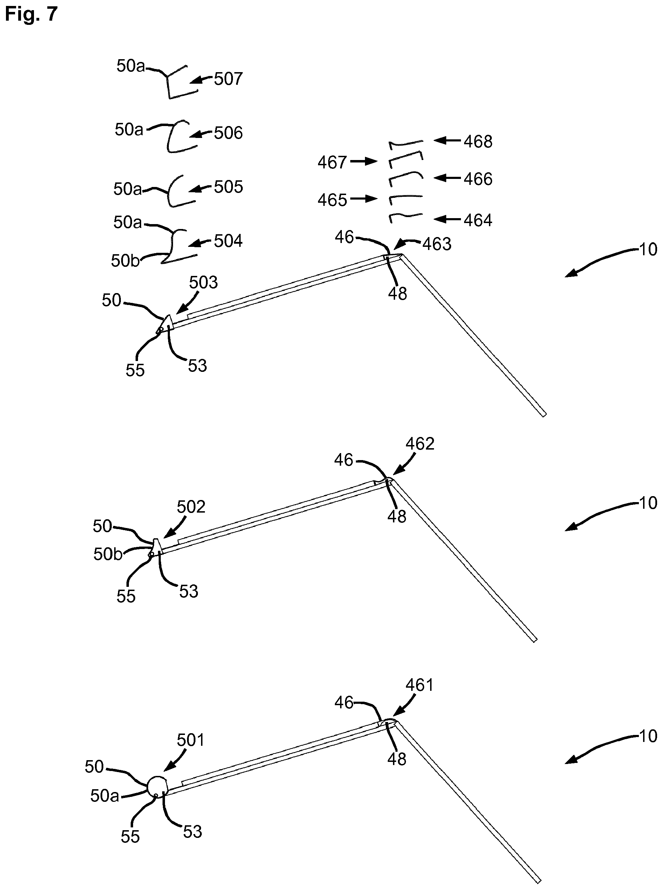

Figur 7 zeigt jeweilige Module 10 entsprechend den Figuren 3 und 4 ohne Grundträger 12. Anhand der seitlichen Darstellung der Figur 7 soll verdeutlicht werden, dass das Rinnenelement 50 sehr unterschiedliche Formen 501 bis 507 aufweisen kann, von denen drei an einem jeweiligen Modul 10 dargestellt sind und vier als einfache Querschnittskontur. Das Rinnenelement 50 kann zumindest eine konvexe Krümmung 50a oder/und zumindest eine konkave Krümmung 50b aufweisen. Alternativ sind aber auch eher eckige Ausgestaltungen möglich, wie beispielsweise die Formern 503, die etwa dreieckig ist, oder die Form 507, die etwa trapezförmig ausgebildet ist.

Aus der Figur 7 ist ferner ersichtlich, dass das Rinnenelement 50 an seiner Stirnseite 53 eine Abflussöffnung 55 aufweist. An der Abflussöffnung 55 kann eine nicht dargestellte Abflussleitung eingebracht werden, so dass mittels des Rinnenelements 50 gesammelter Niederschlag abgeleitet werden kann, insbesondere in Richtung eines Innenbereichs des Flachdachs 16 abgeleitet werden kann. Es wird darauf hingewiesen, dass jedes Modul 10 an seinem Rinnenelement 50 eine individuelle Abflussleitung aufweisen kann. Hierdurch werden keine miteinander verbundene Rinnensysteme mehrerer Rinnenelemente 50 von benachbarten Modulen 10 gebildet, wobei hierbei eine Gesamtneigung von verbundenen Rinnenelementen 50 zu berücksichtigen wäre. Auf diese Weise kann jedes Rinnenelement 50 entweder mit einer gewünschten Neigung relativ zum ersten Solarwandlerträger 30 an diesem angebracht werden.

Wie die Rinnenelemente 50 können auch die Abdeckelemente 46 unterschiedliche Formen 461 bis 468 aufweisen. Dabei bleibt bei jeder Formgebung 461 bis 468 ein Hohlraum 48 zwischen dem Abdeckelement 46 und dem Solarwandlerträger 30 bestehen. Es wird darauf hingewiesen, dass die dargestellten Rinnenelemente 50 mit ihren Formen 501 bis 507 beliebig mit den Formen 461 bis 468 der Abdeckelemente 46 kombiniert werden können.

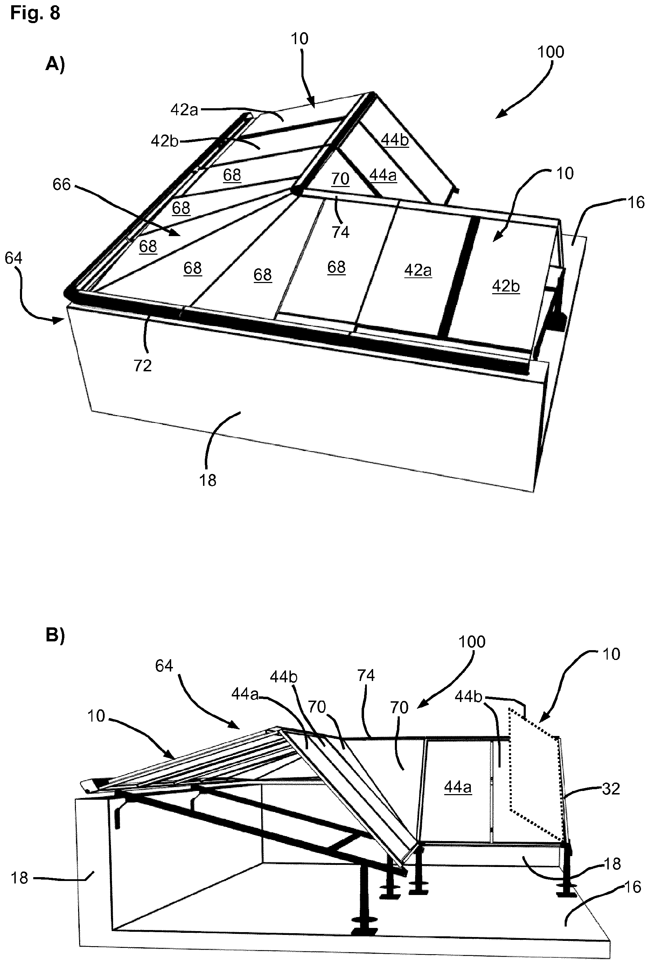

Figur 8 zeigt in zwei perspektivischen Darstellungen das System 100 mit mehreren Modulen 10 an einer Gebäudeecke 64. Ersichtlich sind das Flachdach 16 und die über Eck verlaufende Abschlussmauer 18. Dargestellt sind zwei über die Gebäudeecke 64 benachbarte Module 10. Im Beispiel sind Module 10 entsprechend der Figuren 3 und 4 bzw. ein System entsprechend Figur 6 dargestellt. Die beiden Module 10 sind mittels eines Eckverbindungselements 66 miteinander verbunden. Das Eckverbindungselement 66 kann je nach Neigung der Solarwandlerträger 30, 32 mehr oder weniger Teilelemente 68, 70 aufweisen. Im vorliegenden Beispiel sind fassadenseitig sechs Teilelemente 68, insbesondere zwei etwa rechteckige und vier etwa trapezförmige Teilelemente 68 eingesetzt, um von einem Modul 10 zum anderen über Eck angeordneten Modul 10 zu gelangen (Fig. 8A). Dachseitig sind zwei etwa dreieckige Teilelemente 70 in Verwendung, um den Abstand zwischen den Modulen 10 zu überbrücken (Fig. 8B). Entlang der Teilelemente 68 bzw. entlang des Eckverbindungselements 66 ist ein Rinnenelement 72 vorgesehen. Ferner kann das Eckverbindungselement 66 auch ein Abdeckelement 74 an seinem oberen Rand aufweisen. Das Eckverbindungselement kann ggf. speziell zugeschnittene Solarwandler aufweisen. Üblicherweise ist das Eckverbindungselement allerdings einfach als eine Art Abdeckung ausgeführt, so dass der Eindruck einer im Wesentlichen durchgehenden geneigten Fläche entsteht, die sich von dem einen Modul 10 zu dem anderen Modul 10 über Eck erstreckt. Insbesondere die nach außen hin (fassadenseitig) sichtbaren Teilelemente 68 können auch farblich gestaltet werden, um einen gewünschten Effekt zu erzielen, etwa mittels ähnlicher Farben wie die Solarwandler der Module 10 oder mittels kontrastierender Farben.

In der Figur 8B ist ferner ersichtlich, dass der zweite Solarwandler 44b relativ zum zweiten Solarwandlerträger 32 schwenkbar ist (gestrichelt dargestellt). Dies ermöglicht insbesondere bei einem solchen System 100 einen Zugang unter die Module 10 etwa zu Reparatur- oder Wartungszwecken. Bei einem System 100 aus mehreren Modulen 10 können alle zweiten Solarwandler 44a, 44b schwenkbar ausgeführt sein oder es können nur einzelne zweite Solarwandler 44a, 44b so gelagert sein. Denkbar ist auch, dass jedes Modul 10 einen festen zweiten Solarwandler 44a und einen schwenkbaren zweiten Solarwandler 44b aufweist.

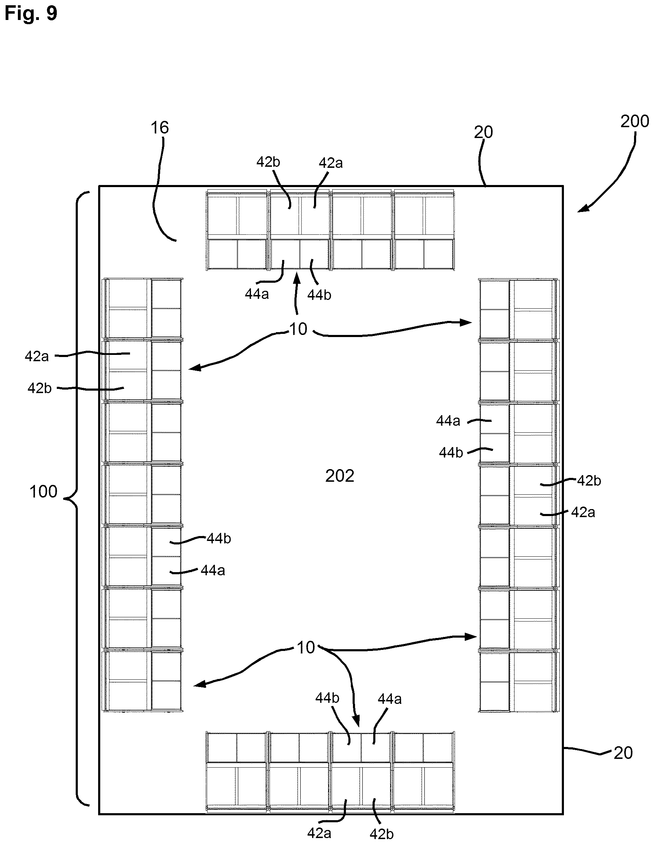

Figur 9 zeigt schematisch und vereinfacht ein Gebäude 200 in eine Draufsicht auf das Flachdach 16. Entlang der vier Gebäudekanten 20 sind jeweils mehrere Module 10 zur Gewinnung von Solarenergie angeordnet. Alle Module 10 bilden ein System 100, das auf dem Gebäude 200 angeordnet ist. Wie sich aus der Darstellung ergibt, sind die zweiten Solarwandler 44a, 44b jeweils zu einem Innenbereich 202 des Flachdachs 16 gerichtet. Man kann auch davon sprechen, dass die zweiten Solarwandler 44a, 44b dachseitig angeordnet sind. Die ersten Solarwandler 42a, 42b sind entlang der Gebäudekanten 20 angeordnet und zur Fassade hin gerichtet. Man kann auch sagen, dass die ersten Solarwandler 42a, 42b fassadenseitig angeordnet sind, wobei mit fassadenseitig nicht ausgedrückt werden soll, dass die ersten Solarwandler 42a, 42b an der (vertikalen) Fassade des Gebäudes 200 angebracht sind. Der Innenbereich 202 des Flachdachs 16 des Gebäudes 200 kann bei einer Anordnung von Modulen 10 entlang der Gebäudekanten 20 weiterhin genutzt werden. Beispielsweise können Teile des Innenbereichs als Dachterrasse genutzt werden. Ferner bleiben in der Regel im Innenbereich 202 angeordnete Gebäudeinstallationen, wie etwa Lüftungsanlagen, Wärmetauscher, Aufzugsantriebe und dergleichen gut zugänglich. Die Module 10 zur Gewinnung von Solarenergie sind also an Bereichen des Gebäudes angeordnet, die üblicherweise ungenutzt sind, so dass bei der Anordnung von derartigen Modulen kaum Zielkonflikte mit anderen Installationen auf einem Gebäude bestehen.

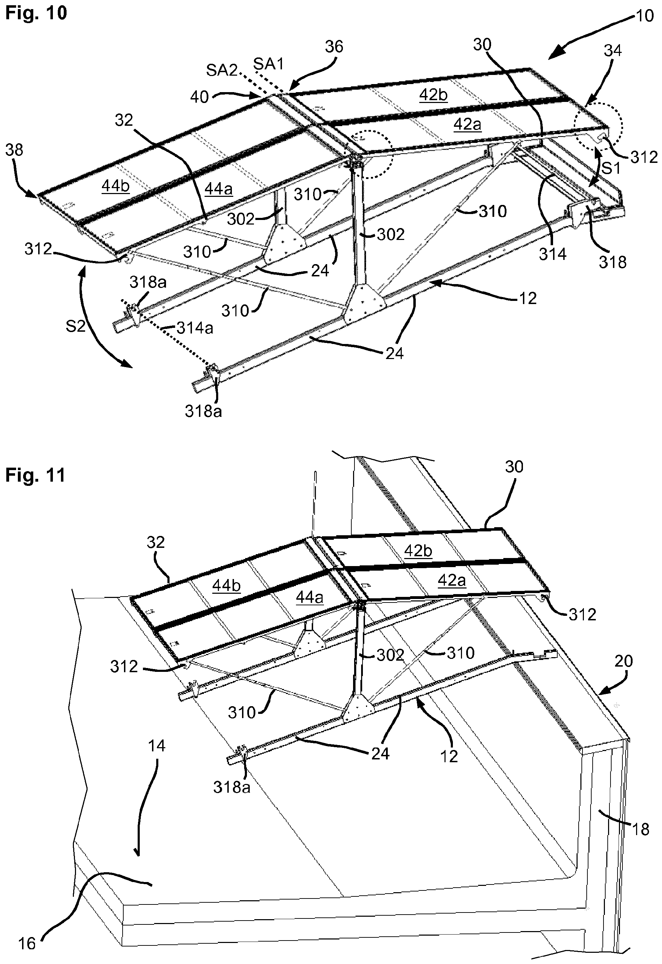

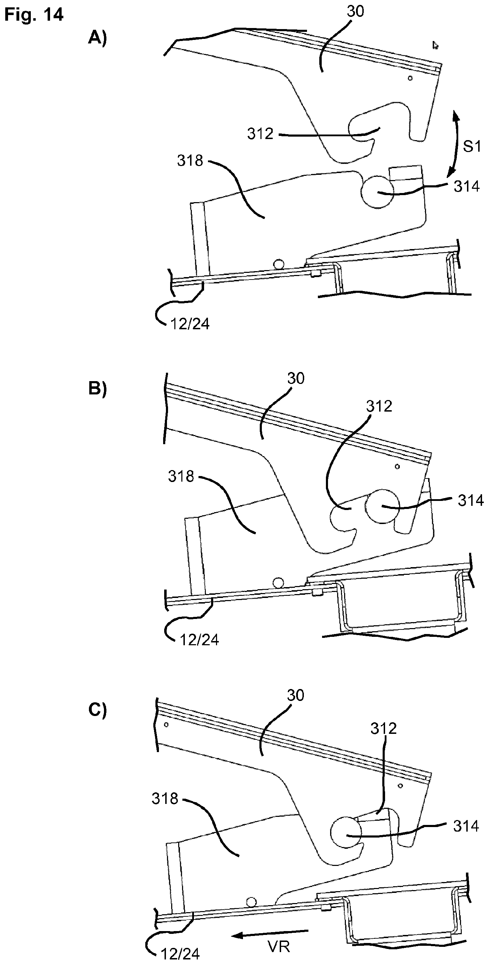

Unter Bezugnahme auf die Figuren 10 bis 14 wird nachfolgend ein Modul 10 vorgestellt, bei dem die ersten Solarwandler 42a, 42b und die zweiten Solarwandler 44a, 44b schwenkbar gelagert sind. Insbesondere ist der erste Solarwandlerträger 30 um eine erste Schwenkachse SA1 nach oben bzw. nach unten drehbar, was durch den Doppelpfeil S1 (Fig. 10, 14A) illustriert ist. Der zweite Solarwandlerträger 32 ist um eine zweite Schwenkachse SA2 nach oben bzw. nach unten drehbar, was durch den Doppelpfeil S2 (Fig. 10) illustriert ist. In der Figur 10 ist ein Zustand gezeigt, in dem der erste Solarwandlerträger 30 und der zweite Solarwandlerträger 32 nach oben geschwenkt sind. Eine solche Stellung der Solarwandler 30, 32 kann auch als Wartungsstellung bezeichnet werden.

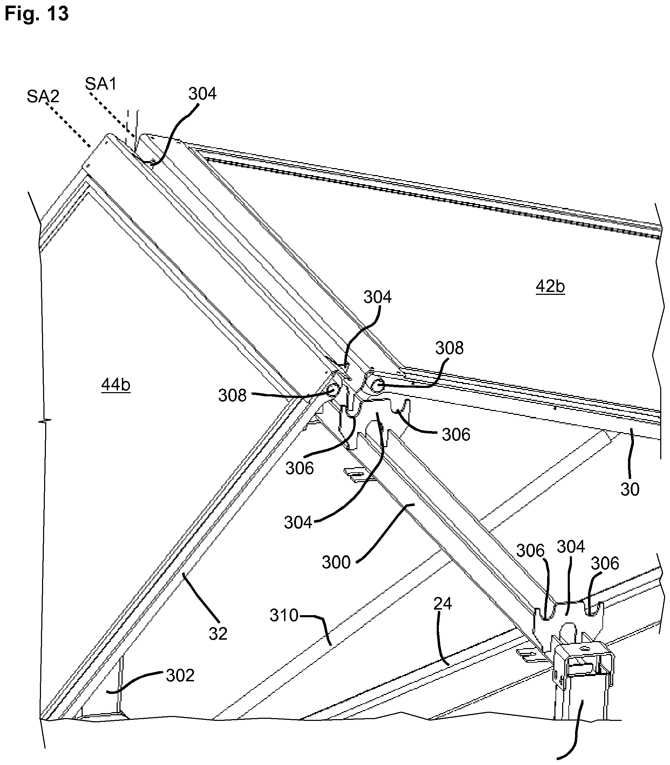

Aus der Figur 13 ist ersichtlich, dass die Schwenkachsen SA1, SA2 im Wesentlichen parallel zueinander und parallel zu einem Querträger 300 verlaufen, an dem die Solarwandlerträger 30, 32 mit ihren oberen Randabschnitten 36, 40 abgestützt sind. Der Querträger 300 ist im dargestellten Beispiel an zwei Stützen 302 gelagert bzw. befestigt. Die Stützen 302 sind mit einem jeweiligen Längsträger 24 des Grundträgers 12 verbunden, was insbesondere aus den Figuren 10 und 11 ersichtlich ist.

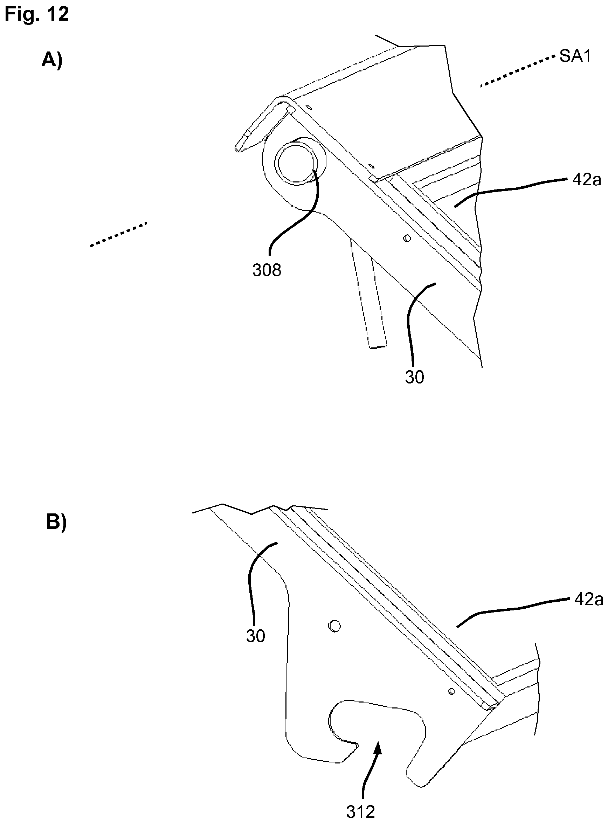

An dem Querträger 300 sind, wie dies aus der Figur 13 ersichtlich ist, Aufnahmeelemente 304 angebracht. Die Aufnahmeelemente 304 weisen jeweilige Ausnehmungen 306 auf. In den Ausnehmungen 306 können jeweilige Stangenelemente 308 aufgenommen werden, die an den jeweiligen Solarwandlerträgern 30, 32 vorgesehen sind (Fig. 12A) . Die Stangenelemente 308 bilden strukturell die Achsen, um welche die Solarwandlerträger 30, 32 drehbar sind.

Damit die Solarwandlerträger 30, 32 in einem nach oben geschwenkten Zustand gehalten werden können, wie dies in den Figuren 10 und 11 gezeigt ist, können Stützelemente 310 vorgesehen sein, die den Solarwandlerträger 30, 32 im geöffneten Zustand an der Grundträgereinrichtung 12, insbesondere an den Längsträgern 24, abstützen. Die Stützelemente 310 sind insbesondere längenverstellbar ausgebildet. Als Stützelemente 310 können beispielsweise einfache, insbesondere in unterschiedlichen Stellungen feststellbare, Teleskopstangen eingesetzt werden.

Denkbar sind als Stützelemente auch hydraulische Federelemente (Teleskopfedern), die das nach oben Bewegen eines Solarwandlers vereinfachen. Weiter ist es auch denkbar, dass ein Stützelement so ausgebildet ist, dass mittels einer Drehbewegung um die Längsachse des Stützelements eine translatorische Verlängerung bzw. Verkürzung des Stützelements erreicht wird. Dabei kann daran gedacht werden, dass die Drehbewegung motorisch erzeugt wird, etwa durch einen Elektromotor mit einer Art Spindelantrieb.

Die Solarwandlerträger 30, 32 können in ihrem unteren Randbereich 34, 38 Rastabschnitte bzw. Verriegelungsabschnitte 312 aufweisen (Fig. 10, 11, 12B, 14), die mit entsprechenden Rastgegenstücken 314 bzw. Verriegelungsgegenstücken, die an der Grundträgereinrichtung 12, insbesondere den Längsträgern 24 gelagert sind, in Eingriff bringbar sind. Hierdurch können die Solarwandlerträger 30, 32 in der nach unten geklappten Stellung, die auch als Normalstellung bezeichnet werden kann, an der Grundträgereinrichtung 12 gesichert werden.

Figur 14 zeigt in den Teilfiguren A) bis C) beispielhaft für den ersten Solarwandlerträger 30, wie das Verriegeln des ersten Solarwandlerträgers 30 in seiner Normalstellung erfolgen kann. Das an dem Grundträger 12 gelagerte Rastgegenstück 314 ist hier eine Stange, die in einer Aufnahme 316 eines Verriegelungselements 318 angeordnet bzw. aufgenommen ist. Das Verriegelungselement 318 ist relativ zu dem Grundträger 12, insbesondere relativ zu dem Längsträger 24 zwischen einer Freigabestellung (Fig. 14A und 14B) und einer Verriegelungsstellung (Fig. 14C) beweglich. Dies ist durch den Pfeil VR in Fig. 14C illustriert. In seiner Verriegelungsstellung (Fig. 14C), in welcher sich der Solarwandlerträger 30 in seiner nach unten geklappten Normalstellung befindet, kann das Verriegelungselement 318 fest mit dem Grundträger 12 bzw. dem Längsträger 24 verbunden sein, insbesondere verschraubt sein, so dass die Relativbewegung des Verriegelungselement 318 eingeschränkt bzw. nicht möglich ist. Somit ist durch das am Grundträger 12 bzw. Längsträger 24 fixierte Verriegelungselement 318, dessen Rastgegenstück 314 (Stange) in Formschlusseingriff mit dem Rastabschnitt 312 des Solwarwandlerträgers 30 steht, die Sicherung des Solarwandlerträgers 30 ermöglicht. Eine nach oben Verschwenken des Solarwandlerträgers 30 ist somit nicht mehr möglich bzw. kann nur dann ermöglicht werden, wenn das Verriegelungselement 318 gelöst wird. Das hier am Beispiel des ersten Solarwandlerträgers 30 in Bezug auf die Fig. 14 beschriebene Verriegeln kann in gleicher oder ähnlicher Weise auch für den zweiten Solarwandlerträger 32 eingerichtet sein. In den Figuren 10 und 11 wird diesbezüglich auf die dort gezeigten Verriegelungselemente 318a hingewiesen. Auch in den Verriegelungselementen 318a kann ein Rastgegenstück 314a (gestrichelte Linie in Fig. 10), beispielsweise eine Stange aufgenommen sein, die dann in Eingriff mit den Rastabschnitten 312 des zweiten Solarwandlerträgers 32 gebracht werden können.

Das in den Figuren 10 bis 14 dargestellte und beschriebene Modul ermöglicht sowohl den Zugang unter die Solarwandler 42a, 42b, 44a, 44b als auch den Zugang nach vorne zur Dachkante 20 hin (Fig. 11). Dies ermöglicht insbesondere auch die Reinigung und gegebenenfalls den Austausch von Dachrinnenelementen 50 (siehe beispielsweise Figuren 1 bis 7. Somit ist der Raum unter den Solarwandlern 42a, 42b, 44a, 44b jederzeit zugänglich. Dieser Raum kann somit beispielsweise auch als Stauraum genutzt werden. Der Vollständigkeit halber wird in Bezug auf die Figur 11 noch darauf hingewiesen, dass dort enthaltenen Bezugszeichen 14, 16, 18 gleiche Teile bezeichnen, die schon in den Figuren 1 und 2 beschrieben worden sind.

Die unter Bezugnahme auf die Figuren 10 bis 14 beschriebene Ausführungsform eines Moduls 10 mit nach oben schwenkbaren Solarwandlerträgern 30, 32 kann in beliebiger und geeigneter Weise mit Merkmalen aus den Ausführungsformen der Figuren 1 bis 9 kombiniert werden. Ferner kann ein Modul 10 der Figuren 10 bis 14 auch Teil einer Anlage sein, wie dies für die Figuren 7 und 9 beschrieben worden ist.

## Patentansprüche

1. Modul (10) zur Gewinnung von Solarenergie mit
einer Grundträgereinrichtung (12);
einem ersten Solarwandlerträger (30) und einem zweiten Solarwandlerträger (32) mit einem jeweiligen oberen Randabschnitt (36, 40) und einem jeweiligen unteren Randabschnitt (34, 38), wobei der erste und der zweite Solarwandlerträger (30, 32) an ihrem unteren Randabschnitt (34, 38) mit der Grundträgereinrichtung (12) verbunden sind und an ihren oberen Randabschnitten (36, 40) gelenkig miteinander verbunden sind, wobei die Solarwandlerträger (30, 32) geneigt zueinander angeordnet sind;
wenigstens einem ersten Solarwandler (42a, 42b), der an dem ersten Solarwandlerträger (30) befestigt ist, und wenigstens einem zweiten Solarwandler (44a, 44b), der an dem zweiten Solarwandlerträger (32) befestigt ist;
wobei die Grundträgereinrichtung (12) dazu eingerichtet ist, entlang einer Gebäudekante (20) von einer Gebäudefassade (60) zu einem Gebäudedach (16), insbesondere Gebäudeflachdach, befestigt zu werden, wobei der erste Solarwandler (42a, 42b) näher an der Gebäudekante (20) angeordnet ist als der zweite Solarwandler (44a, 44b).

2. Modul nach Anspruch 1, wobei oberhalb des ersten Solarwandlers (42a, 42b) an dem oberen Randabschnitt (36) des Solarwandlerträgers (30) ein Abdeckelement (46) angeordnet ist, das entlang einer oberen Kante (47) des ersten Solarwandlers (42a, 42b) verläuft, und wobei insbesondere zwischen dem Abdeckelement (46) und dem ersten Solarwandlerträger (30) ein Hohlraum (48) gebildet ist.

3. Modul nach Anspruch 2, wobei das Abdeckelement (46) wenigstens einen gebogenen Abdeckabschnitt aufweist, wobei der Abdeckabschnitt konvex oder konkav gebogen ist bezogen eine Außenseite des Abdeckelements (46).

4. Modul nach einem der vorhergehenden Ansprüche. wobei an dem ersten Solarwandlerträger (30) an dem unteren Randabschnitt (34) ein Rinnenelement (50) angeordnet ist, das entlang einer unteren Kante (51) des ersten Solarwandlers (42a, 42b) verläuft, wobei insbesondere zwischen dem Rinnenelement (50) und der unteren Kante (51) des ersten Solarwandlers (42a, 42b) ein Traufelement (52) angeordnet ist, das mit dem ersten Solarwandlerträger (30) verbunden ist.

5. Modul nach Anspruch 4, wobei das Rinnenelement (50) wenigstens eine Abflussöffnung (55) aufweist, die in einer Stirnwand (53) des Rinnenelements (50) angeordnet ist, wobei insbesondere die Abflussöffnung (55) mit einer Abflussleitung verbunden ist, die ausgehend von dem Rinnenelement (50) in Richtung des zweiten Solarwandlerträgers (32) geführt ist.

6. Modul einem der vorhergehenden Ansprüche, wobei der zweite Solarwandler (44a, 44b) relativ zum zweiten Solarwandlerträger (32) verschwenkbar ist, derart dass durch das Verschwenken des zweiten Solarwandlers (44a, 44b) eine im zweiten Solarwandlerträger (32) vorhandene Öffnung zugänglich ist.

7. Modul nach einem der vorhergehenden Ansprüche, wobei auf dem ersten Solarwandlerträger (30) mehrere, insbesondere zwei erste Solarwandler (42a, 42b) nebeneinander angeordnet sind, wobei zwischen zwei benachbarten Solarwandlern (42a, 42b) ein Wandlerabstand ausgebildet ist.

8. Modul nach Anspruch 7, wobei zwischen zwei benachbarten Solarwandlern (42a, 42b) ein Füllelement (58) angeordnet ist.

9. Modul nach einem der vorhergehenden Ansprüche, wobei auf dem zweiten Solarwandlerträger (32) mehrere, insbesondere zwei zweite Solarwandler (44a, 44b) nebeneinander angeordnet sind.

10. Modul nach einem der vorhergehenden Ansprüche, wobei die Grundträgereinrichtung (12) derart ausgeführt ist, dass der untere Randabschnitt (34) des ersten Solarwandlerträgers (30) drehbar an der Grundträgereinrichtung (12) abgestützt ist.

11. Modul nach einem der vorhergehenden Ansprüche, wobei die Grundträgereinrichtung (12) derart ausgeführt ist, dass der untere Randabschnitt (34) des ersten Solarwandlerträgers (30) bezogen auf einen Untergrund (14), auf dem die Grundträgereinrichtung (12) aufliegt, einen größeren Abstand zum Untergrund (14) aufweist als der untere Randabschnitt (38) des zweiten Solarwandlerträgers (32).

12. Modul nach einem der vorhergehenden Ansprüche, wobei der erste Solarwandlerträger (30) eine zwischen dem unteren Randabschnitt (34) und dem oberen Randabschnitt (38) gemessene Länge (SL1) aufweist, die größer ist als die Länge (SL2) des zweiten Solarwandlerträgers (32).

13. Modul nach einem der vorhergehenden Ansprüche, wobei der erste Solarwandlerträger (30) und der zweite Solarwandlerträger (32) einen Winkel (a) einschließen von etwa 40° bis 140°, vorzugsweise etwa 60° bis 120°.

14. System (100) zur Gewinnung von Solarenergie mit mehreren Modulen (10) nach einem der vorhergehenden Ansprüche, wobei die Module (10) benachbart zueinander entlang einer Gebäudekante (20) angeordnet sind, und insbesondere mit wenigstens einem Eckverbindungselement (66), das dazu eingerichtet ist, zwei über eine Gebäudeecke (64) benachbarte Module (10) miteinander zu verbinden.

15. Gebäude mit einer im Übergangsbereich zwischen einer Gebäudefassade (60) und einem Gebäudedach (16) befindlichen Gebäudekante (20), an der wenigstens ein Modul (10) nach einem der Ansprüche 1 bis 13 oder ein System (100) nach Anspruch 14 angebracht ist.
